# EUROPEAN PATENT APPLICATION

(11) **EP 3 174 313 A1**
(43) Date of publication of application: **31.05.2017**
(21) Application number: 15425104.5
(22) Date of filing: 27.11.2015
(51) Int. Cl.: H04R 5/02, H04N 5/64

(54) **DEVICE FOR AMPLIFYING LOW-MIDDLE FREQUENCIES OF TV APPARATUSES**

(71) Applicant: Hifive S.r.l., 20148 Milano (MI) (IT)
(72) Inventor: Cognoli, Guido, 20148 Milano (IT); Mariani, Emilio, 22077 Olgiate Comasco (CO) (IT)
(74) Representative: Bruni, Giovanni

(57) **Abstract**

Device (10) apt to amplify the low-middle frequencies of television sets comprising at least an electroacoustic transducer (20) apt to reproduce low-middle audio frequencies, positioned opposite to a screen (110) of the television set (100), a sound pickup means (30) positioned at loudspeakers (120) integrated in the television set (100) and configured to pick up the sound level of said integrated loudspeakers (110) and a control unit (40) configured to adjust the sound level of the electroacoustic transducer (20) according to the sound level picked up by the sound pickup means (30).

## Description

### Technical field of the invention

The present invention relates to a device apt to amplify low-middle frequencies of TV apparatuses, i.e. television sets. The device is particularly suitable for TV sets with flat, ultra-flat or curved panel display, all devices characterized by a very limited thickness unlikely to what happened in the TV sets of the past provided with cathode tube or kinescope.

### Prior art

Since the beginning of this century the modern television sets have not been provided with cathode-tube screen anymore, a technology almost superseded by the liquid crystal display and plasma display panel. The liquid crystal display, LCD, is a kind of flat panel display used in the most various contests, with display dimensions from few tens of millimeters to more than 100 inches. The plasma display panel, PDP, is a kind of flat panel display used for video/television applications (normally to realize monitors and televisions) with image dimensions normally greater than 32 inches.

The TV sets using these technologies are characterized by a flat or ultra-flat panel display. The quality of the image is definitely improved with respect to the generation of the "kinescope". Moreover, recently some TV monitor manufacturers have put curved, in particular concave, screens on the market. The main function of a screen of this kind is to create a more immersive image. The pseudo-3D experience resulting therefrom, even if it is fake, gives really the spectator the impression to be more immersed in the action.

The screens of last generation are so characterized by a very small thickness with respect to the other two dimensions. If on the one hand the image quality, as said, is definitely higher and the TV "piece of furniture" seen as a design object is surely more attractive, on the other hand these devices have a not satisfying audio performance.

This is due to the fact that the reduced depth of the new televisions has caused the consequent reduction in dimensions of the integrated loudspeakers as well as in volume of the acoustic chamber intended thereto. In particular, the flat panel display TV does not allow to house loudspeakers able to reproduce suitably the low frequencies and the same loudspeakers are often obtained so that the sound is not irradiated towards the listening point but to not suitable areas (for example downwards) of the place where they are positioned. To resolve this problem, the user turns up the volume of the loudspeakers excessively, without obtaining a suitable sound pressure and an enjoyable listening anyway.

Various solutions have been developed to obviate this inconvenient. A first solution consists in realizing a two-channels or even multichannel audio-video system (for example, 5.1). The multichannel system, also known as "home theatre", is aimed at reproducing at home and in the most faithful way the sound performance of a theatre or a cinema. It consists of an audio or video support with multichannel audio tracks and multichannel amplifiers, which allow a spatial sound return (3D) through various loudspeakers, suitably positioned in the place of usage. Clearly this solution improves the audio of a flat panel display TV but at the expense of a very high cost of the system as well as of an invasiveness which has a great impact on the aesthetic profile.

A second solution is the one commonly called "soundbar". It is an amplified diffuser which repeats the audio signal of the television transmission with a definitely better quality and it is commonly positioned in front of the display and however detached from the same display. This solution cannot be compared to the quality of a "home theatre" since it has the drawback to be influenced by the acoustics and the structure of the listening room. In particular, in case of places in which the "soundbar" is not exactly in the center of the wall, with acoustically absorbent furniture (couches, curtains, carpets) from one side and reflecting one (glasses and lucid furniture) on the other side the results are quite unsatisfying.

The "soundbar" solution can provide the presence of a separated subwoofer, or not. Even if the number, the dimensions and the technical features of the loudspeakers provided in many of the most modern "soundbars" guarantee surely better performances than the ones of the sole television, the low range needs inevitably a subwoofer to guarantee involving performances. Some among the most recent "soundbar" solutions integrate a section dedicated exactly to the lowest range, without obligating to buy another loudspeaker. The "soundbar" solution comprises a section of integrated power, so it is sufficient to connect it directly to the TV set or to one of the sources connected thereto (for ex. decoder) to use it. Anyway, however it is configured, also this solution, as in the previous one, results aesthetically invasive, quite expensive and needing another remote control in addition to the one yet provided for the television set.

A third solution is the one called "soundbase", which is conceptually very similar to the just described one. What distinguishes a "soundbar" from a "soundbase" is the fact that the first one has a reduced depth and it is installed in front of the television or is coupled to the wall, while the second one is more squared and becomes a real base for the television. Basically the "soundbases" are complete and finished systems while the "soundbars" provide, as yet seen, the possibility to add an outer subwoofer. Also the "soundbase" solution comprises a section of integrated power. Also this solution, as the previous ones, results aesthetically invasive, definitely expensive and needing another remote control in addition to the one yet provided for the television set.

### Summery of the invention

Aim of the present invention is to realize a device apt to amplify the low-middle frequencies of television sets (TV), which guarantees at the same time excellent quality of sound reproduction without being expensive and aesthetically invasive.

According to the present invention, the device comprises at least an electroacoustic transducer positioned on the rear wall of the TV and apt to reproduce the low-middle frequencies, the device having the features described in the independent claim appended.

Further preferred and/or particularly advantageous embodiments of the invention are described according to the characteristics defined in the dependent claims appended.

### Brief description of the drawings

The invention will be described in the following with reference to the appended drawings, which show some not limiting embodiment examples thereof, in which:
Figure 1 is a tridimensional view of the rear wall of a television set and of the mounting kit of the loudspeaker belonging to the device according to a preferred embodiment of the present invention,
Figure 2 shows schematically the mounting steps of the loudspeaker on the mounting kit,
Figure 3 shows a perspective side view of the television set of fig. 1 having the loudspeaker yet assembled and connected to a microphone belonging to the device according to the invention,
Figure 4 shows the functioning scheme of the device according to the invention.

### Detailed description

With reference to said figures, it is described a device 10 according to a preferred embodiment of the present invention, which is apt to amplify the low-middle frequencies of a television set 100. The device comprises substantially at least an electroacoustic transducer 20, a sound pickup means 30 and a control unit 40.

The electroacoustic transducer 20 is apt to reproduce audio frequencies in the low and medium range and is arranged opposite to a screen 110 of the television set 100, so that it is not visible to the user of the television set, thus not impacting on the aesthetic aspect of the TV "piece of furniture".

The electroacoustic transducer 20 is preferably a loudspeaker of the "woofer" and/or "midrange" kind, thus intended to reproduce audio frequencies of the 50 Hz - 500 Hz range (low frequencies) and/or 500 Hz - 8000 Hz range (medium frequencies). The loudspeakers can be also more than one, for example a "woofer" and a "midrange" separated with respect to each other, or a "subwoofer" and a "woofer" separated with respect to each other as well.

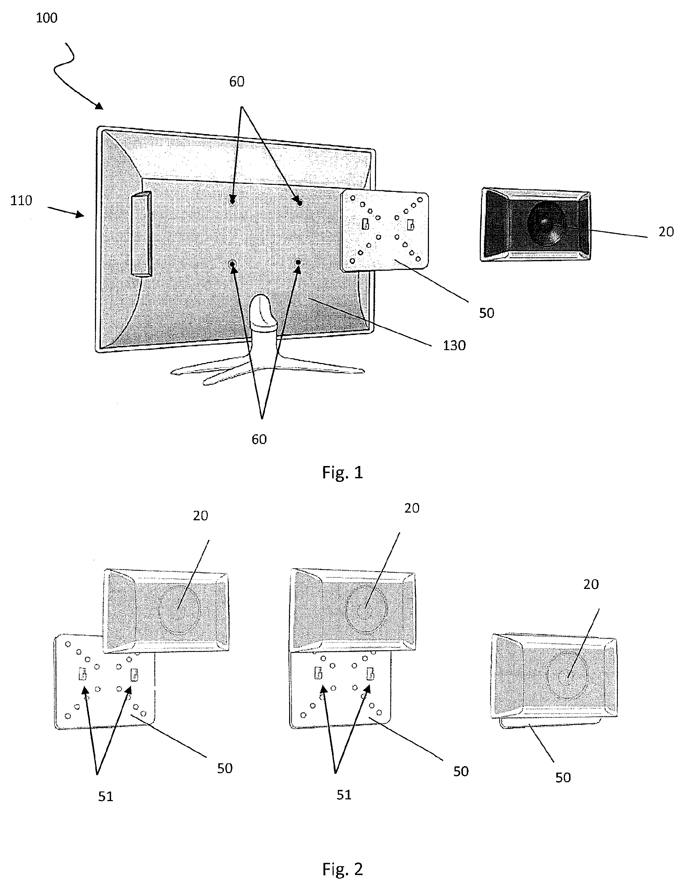

Conveniently, as it is shown in fig. 1, the loudspeaker can be fixed on the rear wall 130 of the television set 100. The mounting kit of the loudspeaker on the rear wall is very simple and it consists substantially of a base 50 and suitable connection means of the base to the wall of the television set. To this aim it results convenient to use the holes 60 normally intended to the wall fixing of the television set. Almost all the modern TV sets with flat panel display are provided with these holes 60 having dimensions and mutual distance between centers standardized according to a standard of the Video Electronics Standards Association (VESA). Therefore, the base 50 results stably fixed to the rear wall 130 of the television set 100 through suitable connection means introduced in the holes 60, realized according to VESA standard.

The base 50 can comprise a suitable blocking system to which the loudspeaker 20 can be coupled. For example, as it can be seen in fig. 2, the base 50 can be provided with a couple of hooks 51 which allow to fix stably but removably according to the needs, the loudspeaker 20 to the base 50.

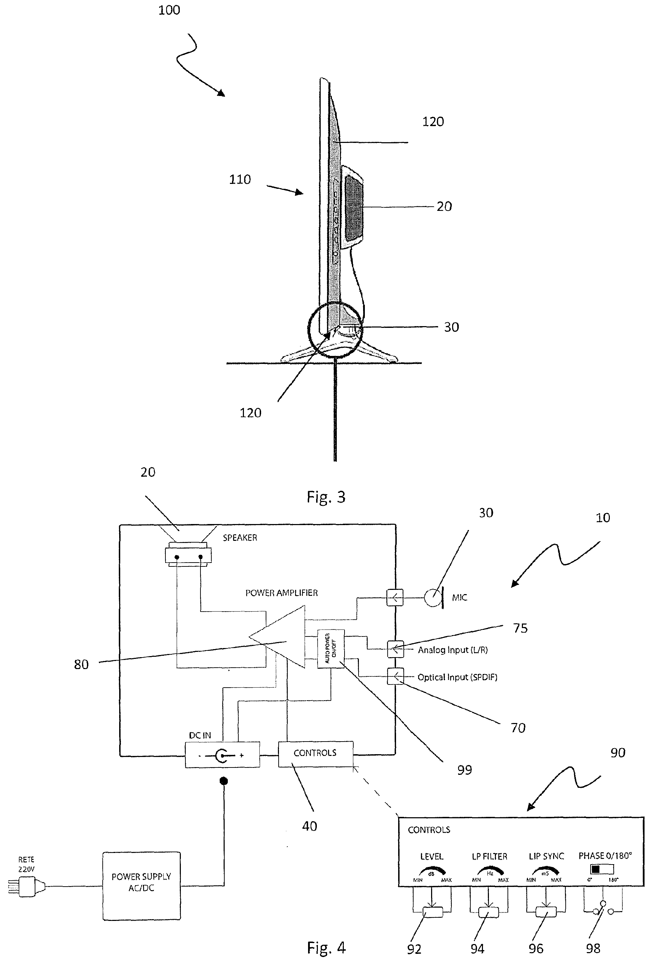

With reference to fig. 3, the sound pickup means 30 is positioned at the loudspeakers 120 integrated in the television set 100 and is configured to pick up the sound level of said integrated loudspeakers.

For example, it can be a microphone stably connected to the loudspeakers integrated in the television sets 100 by means of adhesives.

With reference to fig. 4, the device 10 comprises further a control unit 40 configured to adjust the sound level of the electroacoustic transducer 20 according to the sound level picked up by the sound pickup means 30. Practically, the loudspeaker or more generally the low-middle module 20 works synergistically with the loudspeakers of the TV filling their lack in the low-middle range of the sound. The inlet signal at the low-middle module is withdrawn by the optic digital (SPDIF) 70 or analogue 75 output of the TV, which are provided in almost all the devices. The volume of the loudspeaker or low-middle module is adjusted by means of the microphone 30 which picks up the sound emitted by the loudspeakers 120, and by means of the control unit 40 and an amplifier 80 translates it in real time in a corresponding sound level to be applied to the low-middle module 20.

For the optimal functioning of any TV model, the control unit 40 can be provided with suitable auxiliary circuits 90. For example, a first circuit 92 can be used to control the intervention level of the system, i.e. how intense the desired contribution on the low frequencies has to be; a second circuit 94 is used as low pass filter with cut-off frequency adjustable so that the frequency response is harmonized of the system with the loudspeakers of the TV, a third circuit 96 of the kind "Lip Sinc" can manage the latency time between the emission of the loudspeakers of the TV and the digital output; a fourth circuit 98 is dedicated to manage, in case it is needed, the inversion of the acoustic phase to optimize the acoustic performance according to the reflections of the sound generated by the possible presence of reflecting surfaces (for example, the walls) arranged at the rear with respect to the position of the TV set. It is also provided that the control unit 40 comprises among its functions a fifth circuit 99, directly connected to the amplifier 80 and intended to manage the device self-turning on in presence of the signal from the digital or analogue output of the TV.

The advantages allowed by the device according to the invention are various: first of all it is a simple but efficient device in its realization; it has no impact on the aesthetic of the place in which the television is arranged since it is totally invisible to the user; it allows to use a normal TV remote control without needing any other dedicated additional remote controls; finally it has a cost definitely contained if compared to the solutions known so far.

In addition to the embodiments of the invention, as above described, it is to be intended that there exist many other variants. Further, it is to be intended that said embodiments are only example and do not limit the object of the invention and its possible application or configurations. On the contrary, even if the above described description allows the experts in the field to carry out the present invention at least according to an embodiment thereof, it is to be intended that many variations of the elements above are possible without departing from the object of the invention, as encompassed by the appended claims, literally interpreted and/or according to legal equivalents thereof.

## Claims

1. Device (10) apt to amplify the low-middle frequencies of a television set (100), comprising:
- at least an electroacoustic transducer (20) apt to reproduce low-middle audio frequencies, positioned opposite to a screen (110) of the television set (100);
- a sound pickup means (30) positioned at loudspeakers (120) integrated in the television set (100) and configured to pick up the sound level of said integrated loudspeakers (120);
- a control unit (40) configured to adjust the sound level of said at least one electroacoustic transducer (20) according to the sound level picked up by the sound pickup means (30).

2. Device (10) according to claim 1, **characterized in that** said at least one electroacoustic means (20) is a loudspeaker of the "woofer" and/or "midrange" kind and is positioned on a rear wall (130) of the television set (100).

3. Device (10) according to claim 2, **characterized in that** said at least one electroacoustic transducer (20) is coupled to a base (50) in turn stably fixed to the rear wall (130) of the television set (100).

4. Device (10) according to claim 3, **characterized in that** the base (50) is stably fixed to the rear wall (130) of the television set (100) through connection means introduced in holes (60) provided on the rear wall (130) of the television set (100) and normally intended to a wall fixing of the television set.

5. Device (10) according to any one of the preceding claims, **characterized in that** said sound pickup means (30) is a microphone.

6. Device (10) according to claim 5, wherein said microphone is stably connected to the loudspeakers (120) integrated in the television set (100) by means of adhesives.

7. Device (10) according to any one of the preceding claims, **characterized in that** said control unit (40) comprises a first circuit (92) which adjusts the sound level of the system.

8. Device (10) according to any one of the preceding claims, **characterized in that** said control unit (40) comprises a second circuit (94) configured to be used as low pass filter with adjustable cut-off frequency which harmonizes the frequency response of the device (10) with the one of the loudspeakers (120) integrated in the television set (100).

9. Device (10) according to any one of the preceding claims, **characterized in that** said control unit (40) comprises a third circuit (96) of the "Lip Sinc" kind configured to manage the latency time between the emission of the loudspeaker (120) integrated in the television set (100) and a digital or analogue output of the television set.

10. Device (10) according to any one of the preceding claims, **characterized in that** said control unit (40) comprises a fourth circuit (98) configured to manage the inversion of the acoustic phase.

11. Device (10) according to any one of the preceding claims, **characterized in that** said control unit (40) comprises a fifth circuit (99), directly connected to the amplifier (80) and configured to manage the self-turning on of the device (10) in presence of the signal from the digital or analogue output of the television set (100).
